Europäisches Patentamt

European Patent Office

Office européen des brevets

(11) Publication number : **0 485 195 A1**

# (12) EUROPEAN PATENT APPLICATION

(21) Application number : **91310266.1**

(22) Date of filing : **06.11.91**

(51) Int. Cl.⁵ : **F16M 7/00**

(30) Priority : **08.11.90 GB 9024318**

(43) Date of publication of application :
**13.05.92 Bulletin 92/20**

(84) Designated Contracting States :
**AT BE CH DE FR GB IT LI NL SE**

(71) Applicant : **LINN PRODUCTS LIMITED**
**Eaglesham House Farm, Floors Road,**
**Waterfoot**
**Eaglesham, Glasgow G76 0EP (GB)**

(72) Inventor : **Dalgleish, Martin**
**3A Eastwoodmains Road**
**Giffnock, Glasgow G46 6QB (GB)**

(74) Representative : **Murgitroyd, Ian G. et al**
**Murgitroyd and Company Mitchell House 333**
**Bath Street**
**Glasgow G2 4ER (GB)**

(54) **An adjustable support.**

(57) An adjustable support is described which is intended for use with loudspeaker stands. the adjustable support comprises a spiked foot (16) which threadedly engages a spindle (14) at one end (34) of the spindle (14). The other end (32) of the spindle (14) has an adjusting knob (18) fixed to it. The one end (34) of the spindle is located within a bore (22) in an object (12) which may be a loudspeaker stand. The spindle .(14) is rotatable within the bore (22) but is prevented from moving axially due to the knob (18) and an annular flange (36) on the spindle (14) which trap an annular flange (28) on the object (12). The spiked foot (16) is prevented from rotating by a protruding member (20) which engages in a slot (54) in the foot (16). Hence, rotation of the spindle (14) causes movement of the spiked foot (16) relative to the object (12) along the axis of the spindle (14).

Fig. 1

EP 0 485 195 A1

_FIG.5_

The present invention relates to an adjustable support which allows an object to be levelled relative to a supporting surface, and is particularly, but not exclusively, concerned with spiked feet for use in connection with audio loudspeaker stands.

Spiked feet are commonly used in loudspeaker stands for hi-fidelity audio systems to improve the coupling between the stand and the supporting floor, especially where the floor is carpeted. It is desirable that the height of the spikes be adjustable to allow the stand and speaker to be levelled if, for example, the floor is uneven. An adjustable spiked foot can be provided simply by forming the spike at the end of a threaded shaft which extends through a threaded bore in a limb of the stand. A knob is attached to the end of the shaft remote from the spike, rotation of the knob causing the height of the spike to vary. In this case, the adjusting knob also moves vertically as it is rotated, which is undesirable for both cosmetic and practical reasons.

In accordance with the present invention an adjustable support located in a portion of an object to be placed on a supporting surface comprises a spindle extending into a bore formed in the portion of the object, one end of the spindle being formed with a screw thread and the spindle being rotatable within the bore; means for preventing axial movement of the spindle; a support surface engagement member threadably coupled to the one end of the spindle by means of the screw thread; and means for preventing rotation of the engagement member about the spindle axis; and whereby rotation of the spindle moves the engagement member relative to the object along the axis of the spindle.

Preferably, the means for preventing axial movement of the support comprises two axially spaced shoulders on one of the spindle and the bore and a flange on the other of the spindle and the inside of the bore which protrudes into the space defined by the shoulders. Typically, the shoulders and the flanges extend circumferentially within an annular space between the bore and the spindle. Typically, when the shoulders are on the spindle one of the shoulders is defined by a head portion on the other end of the spindle. The head portion may be provided by a knob or lever fixed to the spindle, or formed on the end of the spindle. When the head portion is in the form of a member coupled to the other end of the spindle, this may be achieved by threadedly coupling the member to the other end of the spindle by means of threads having an opposite direction to the threads coupling the engagement member to the spindle.

Preferably, when the flange is on the inside of the bore, it is annular in form.

Typically, the means for preventing rotating of the engagement member comprises a protruding member on the inside of the bore which extends into a recess in the engagement member. The recess may be in the form of a slot. Alternatively, the means for preventing rotation may comprise a protruding member on the engagement member which engages a recess on the inside of the bore.

Preferably, the protruding member is a screw which may be tightened to substantially prevent axial movement of the engagement member.

Preferably the engagement member may comprise a portion in the form of a spike.

Whilst the invention is particularly intended for use with loudspeaker stands, it is equally applicable to other objects, including furniture, floor standing domestic appliances, or other devices or instruments which may have to be levelled upon a floor or other supporting surface.

An Example of an adjustable support in accordance with the invention will now be described with reference to the accompanying drawings, in which:-

Fig. 1 is a side view, partly in section, of an adjustable, spiked foot assembly embodying the invention;

Fig. 2 is a side view of a spindle member forming part of the assembly of Fig.1;

Fig. 3 is a side view of a spiked foot member forming part of the assembly of Fig.1;

Fig. 4 is a top view of the foot member of Fig.3;

Fig. 5 is a vertical cross-section of the foot member of Figs. 3 and 4;

Fig. 6 is a side view of a knob forming part of the assembly of Fig. 1;

Fig. 7 is a vertical cross-section of the knob of Fig. 6;

Fig. 8 is a side view of the frame of a loudspeaker stand, partly in section, adapted to receive a plurality of spiked feet assemblies as illustrated in Figs 1 to 7; and

Fig.9 is a plan view of the frame of Fig. 8.

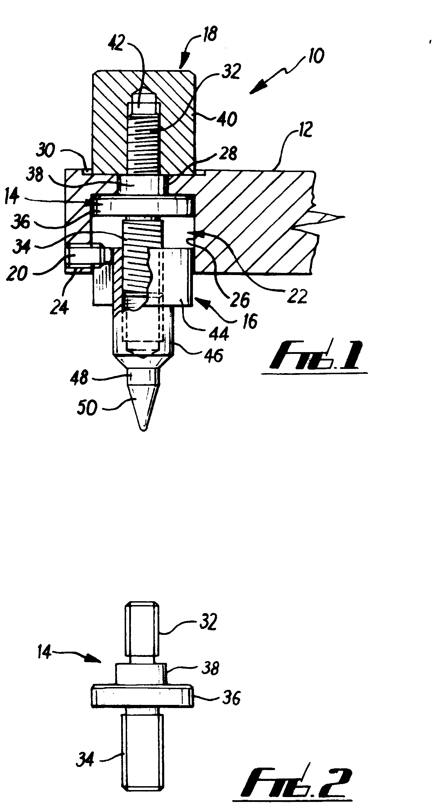

Referring to Fig. 1 of the drawings, an adjustable spiked foot assembly 10 embodying the invention, is located in a structural member 12 forming part of a stand for an audio loudspeaker (not shown). The assembly comprises a spindle member 14, a spiked foot member 16, a knob 18 and a grub-screw 20, and is located in a vertical through-bore 22 formed in the structural member 12. The grub-screw 20 is located in a threaded, horizontal bore 24 formed in an end or side of the structural member 12 and which communicates with the vertical bore 22 adjacent a lower end thereof.

The vertical bore 22 comprises a first, lowermost portion 26 having a first diameter and a second, uppermost portion 28, having a second diameter less than the first and co-axial therewith, thus defining an annular shoulder adjacent the upper end of the vertical bore 22. A countersink 30 is formed around the upper end of the second portion 28 to accommodate the lower end of the knob 18.

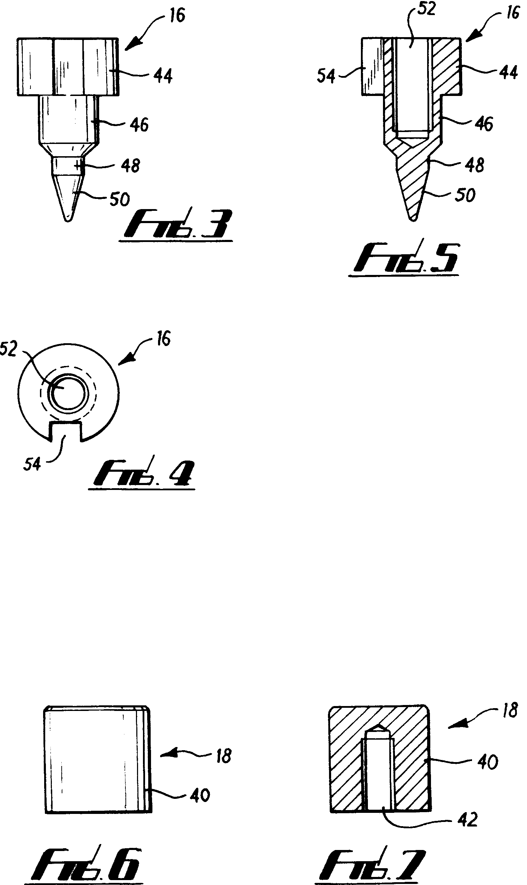

The spindle member 14 is rotatably mounted within the vertical bore 22 and comprises (see Fig. 2) a central shaft having an upper end 32 formed with a right-hand screw thread and a lower end 34 formed with a left-hand screw thread. Intermediate the two ends is formed an annular flange comprising a first, lowermost portion 36 having a diameter slightly less than that of the first portion 26 of the vertical bore 22 and a second, uppermost portion 38 having a diameter slightly less than that of the second portion 28 of the vertical bore 22.

In use, the upper surface of the first flange portion 36 seats against the annular shoulder formed in the vertical bore 22 between the first and second portions 26 and 28 thereof. The knob 18 (Figs. 6 and 7) comprises a generally cylindrical body 40 having an internally right-hand threaded blind bore 42 extending along its longitudinal axis from a lowermost surface thereof. The knob 18 is threaded onto the upper end 32 of the spindle member 14 and is fixed thereto by thread adhesive or other suitable means. Thus, the spindle member 15 is free to rotate within the vertical bore 22, however any vertical movement thereof is prevented by the knob 18 and the first flange portion 36.

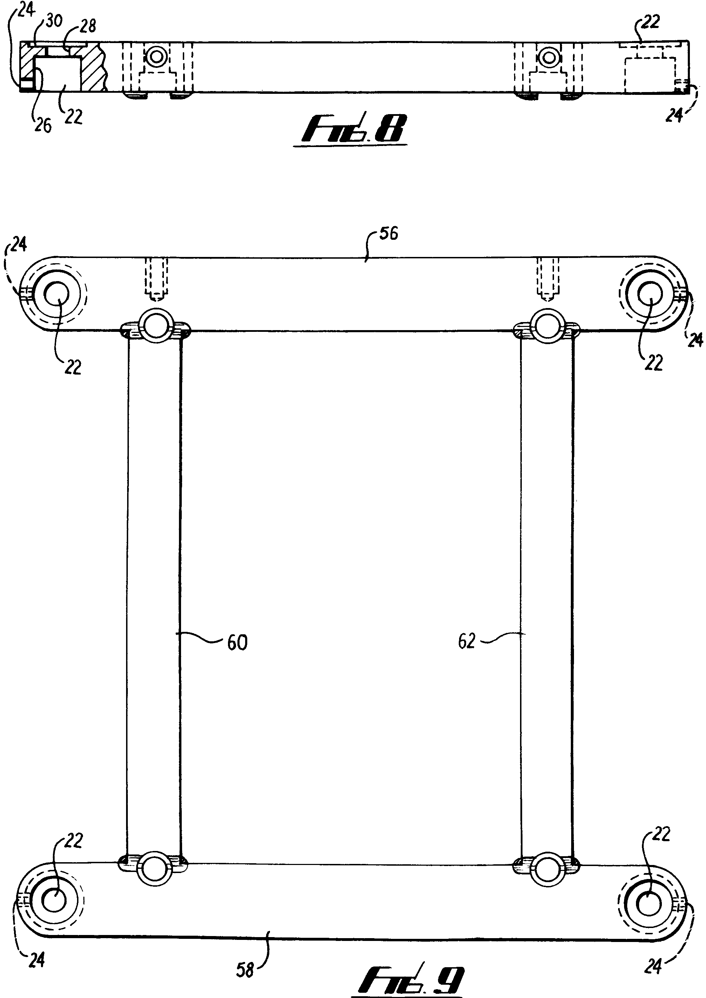

Referring to Figs. 3, 4 and 5, the foot member 16 comprises a first, uppermost, cylindrical portion 44, having a diameter substantially equal to that of the first flange portion 36 of the spindle member 14, a second, intermediate, cylindrical portion 46 having a lesser diameter than the first cylindrical portion 44, and a third lowermost cylindrical portion 48, having a diameter less than that of the intermediate portion 46 and terminating in a spike 50. An internally left-hand threaded, blind bore 52 extends downwardly from the topmost surface of the first cylindrical portion 44 into the interior of the second cylindrical portion 46, and a vertical slot 54 is formed in the side of the first portion 44 having a depth substantially equal to the difference in the radii of the first and second cylindrical portions 44 and 46.

In use, the foot member 16 is threaded onto the lower end 34 of the spindle member 14, whereafter the grub-screw 20 is screwed into the horizontal bore 24 and engages the slot 54 so as to prevent subsequent rotation of the foot member 16.

As can be seen, the arrangement is such that rotation of the knob 18 will cause the spike 50 to be displaced vertically, without any corresponding vertical movement of the knob 18 itself. In Fig. 1 the spike 50 is shown at its lower limit of travel. In the illustrated embodiment clockwise rotation of the knob 18 causes the foot member 16 to travel downwards. The grub-screw 20 can be tightened after adjustment of the foot to lock the foot member 16 in its chosen position.

Figs. 8 and 9 illustrate one example of a loudspeaker stand adapted to receive four foot assemblies as described above. The stand comprises first and second substantially identical, elongate, parallel structural members 56 and 58 corresponding to the member 12 of Fig. 1 and having vertical and horizontal bores 22 and 24 formed at either end thereof, the members 56 and 58 being connected to one another by parallel cross members 60 and 62. An adjustable foot assembly can be located in each of the bores 22.

In the described embodiment, the spindle 14, foot member 16 and knob 18 may all suitably be formed from stainless steel, and the frame of the stand from mild steel bars.

As will be appreciated, the details of the construction of the foot assembly described herein may be varied so long as vertical movement of the knob and spindle and rotational movement of the foot member are constrained.

As will also be apparent, the spike 50 may be replaced by any other configuration of foot for use either in loudspeaker stands or in any other object, device, appliance or instrument which requires adjustable feet.

## Claims

1 An adjustable support located in a portion of an object (12) to be placed on a supporting surface comprising a spindle (14) extending into a bore (22) formed in the portion of the object (12), one end (34) of the spindle (14) being formed with a screw thread and the spindle (14) being rotatable within the bore (22); means (28, 36, 40) for preventing axial movement of the spindle (14); a support surface engagement member (16) threadably coupled to the one end (34) of the spindle (14) by means of the screw thread; and means (20, 54) for preventing rotation of the engagement member (16) about the spindle (14) axis; and whereby rotation of the spindle (14) moves the engagement member (16) relative to the object (12) along the axis of the spindle (14).

2 An adjustable support according to claim 1, wherein the means (28, 36, 40) for preventing axial movement of the spindle (14) comprises two axially spaced shoulders (36, 40) on one of the bore (22) and the spindle (14), and a flange (28) on the other of the bore (22) and the spindle (14) which is engaged by the two axially spaced shoulders (36, 40).

3 An adjustable support as claimed in claim 2, wherein the flange (28) is formed adjacent the upper end of the bore (22).

4 An adjustable support according to any of the preceding claims, wherein the means (20, 54) for preventing rotation of the engagement member (16) comprises a protruding member (20) on one of the engagement member (16) and the inside of the bore (22) which is adapted to engage a recess (54) in the other of the engagement member (16) and the inside of the bore (22).

**5** An adjustable support as claimed in claim 4, wherein the protruding member (20) is on the inside of the bore (22) and is located in a transverse bore (24) communicating with the bore (22).

**6** An adjustable support according to any of the preceding claims, wherein one of the shoulders (40) is formed by a member (40) which is attached to the other end (32) of the spindle (14).

**7** An adjustable support according to Claim 6, wherein the member (40) is threadedly attached to the other end (32) of the spindle (14) by means of co-operating screw threads of opposite direction to the screw threads of the engagement member (16) and the one end (34) of the spindle (14).

**8** An adjustable support according to any of the preceding claims, wherein the engagement member (16) comprises a portion (50) in the form of a spike.

**9** A stand (56, 58, 60, 62) for an audio loudspeaker having an adjustable support according to any of the preceding claims.

Fig.1

Fig.2

*Fig.3*

*Fig.5*

*Fig.4*

*Fig.6*

*Fig.7*

FIG. 8

FIG. 9

| European Patent Office | EUROPEAN SEARCH REPORT | Application Number |
|---|---|---|
| | | EP 91 31 0266 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-U-8 815 012 (MWH-METALLWERK)<br>* Page 7, line 11 - page 8, line 30; figure 1 * | 1,2,3,4,6 | F 16 M 7/00 |
| A | | 5 | |
| X | DE-A-4 007 100 (PLAN OBJECT)<br>* Column 3, line 50 - column 4, line 12; figures 1-3 * | 1 | |
| A | CH-A- 309 138 (FREIBURGHAUS)<br>* Page 1, lines 53-66; figures 3,6 * | 5 | |
| A | US-A-4 721 275 (BENTON)<br>* Column 1, line 56 - column 2, line 6; figure 4 * | 8 | |
| A | DE-U-8 801 356 (STEINER)<br>* Figures 3,4 * | 8 | |
| A | DE-A-2 259 729 (KURAISURA DENKI)<br>* Page 6, line 24 - page 7, line 15; figures 4,7 * | 9 | TECHNICAL FIELDS SEARCHED (Int. Cl.5) |
| A | FR-A-1 436 065 (AUDAX)<br>* Page 1, right-hand column, lines 20-30; figures 1,2 * | 9 | F 16 M<br>A 47 B<br>H 04 R |

The present search report has been drawn up for all claims

| Place of search | Date of completion of the search | Examiner |
|---|---|---|
| THE HAGUE | 04-02-1992 | BARON C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)